# EUROPEAN PATENT APPLICATION

(11) **EP 2 437 366 A2**
(43) Date of publication of application: **04.04.2012**
(21) Application number: 11181894.4
(22) Date of filing: 20.09.2011
(51) Int. Cl.: H02H 3/04, H02H 3/06, H02H 1/00

(54) **Electric device and method to detect arc fault in the same**

(30) Priority: 29.09.2010 KR 20100094492
(71) Applicant: Samsung Electronics Co., Ltd., Suwon-si, Gyeonggi-do 506-762 (KR)
(72) Inventor: Kim, Myung Chul, Gyeonggi-do (KR); Noh, Ki Hing, Seoul (KR); Jo, Se Jin, Gyeonggi-do (KR)
(74) Representative: Grünecker, Kinkeldey, Stockmair & Schwanhäusser

(57) **Abstract**

An electric device includes a plurality of loads and an arc fault detection device to output arc signal detection information when an arc signal has been input from a wire harness connected to the plurality of loads. A method includes sequentially supplying, when the arc signal detection information has been input from the arc fault detection device, Alternating Current (AC) power to each of the plurality of loads during a preset time, and detecting a load at which an arc fault has occurred from among the plurality of loads. Thus, a location (load) at which an arc fault has occurred is correctly detected, thereby appropriately coping with (repairing) the arc fault.

## Description

### BACKGROUND

### 1. Field

Embodiments of the present disclosure relate to an electric device and an electric device system which may detect an arc fault that causes electrical fire, and a method to detect an arc fault in the same.

### 2. Description of the Related Art

An arc fault occurs over electric wirings due to aging, destruction or insulation defects of wirings or overcurrent-causing physical/electrical stress of wirings. Since such arc faults cause electrical fire, in the United States, it has become compulsory to use an Arc Fault Circuit Interrupter (AFCI) which detects an arc fault in an electric device and disconnects circuits of the electric device when an arc fault has occurred.

The AFCI is installed on a distributing board to detect whether or not an arc fault has occurred on distribution wires and interrupts power supply to the distribution wires when an arc fault has been detected.

When detecting an arc fault, it is important to discriminate between an arc signal and a signal similar to the arc signal (hereinafter referred to as a 'pseudo-arc signal'). Since the waveform of an arc signal is similar to that of a signal generated when an electric device is activated (hereinafter referred to as an 'activation signal') or a signal generated from a dimmer (hereinafter referred to as a 'dimmer signal'), the conventional AFCI may erroneously identify a pseudo-arc signal such as an activation signal or a dimmer signal as an arc signal, thereby causing an abnormal operation in which circuits of the electric device are disconnected.

Although the conventional AFCI detects the occurrence of an arc fault and disconnects a distribution system from a power source upon detection of an arc fault as described above, it may not be possible for the conventional AFCI to detect a correct location (load) at which an arc fault has occurred. Even when the conventional AFCI has detected the occurrence of an arc fault, the conventional AFCI may not be able to appropriately cope with (e.g., repair) an arc fault since it may not be possible to correctly determine a location at which the arc fault has occurred. That is, when an arc fault is detected, the conventional AFCI not only needs to replace (or repair) distribution wires at which the arc fault has occurred but also needs to replace (or repair) all wirings to which a load is connected.

### SUMMARY

Therefore, it is an aspect of the present disclosure to provide an electric device, an electric device system, and a method to detect an arc fault in the same, wherein it may be possible to correctly detect a location (load) at which an arc fault has occurred and to provide correct information when the electric device or the electric device system is repaired, thereby appropriately coping with the arc fault.

It is another aspect of the present disclosure to provide an electric device, an electric device system, and a method to detect an arc fault in the same, wherein it may be possible to increase the accuracy of detection of the occurrence of an arc fault and thus to prevent an abnormal operation in which relevant circuits are disconnected due to incorrect identification of a pseudo-arc signal as an arc signal.

Additional aspects of the disclosure will be set forth in part in the description which follows and, in part, will be apparent from the description, or may be learned by practice of the disclosure.

In accordance with one aspect of the present disclosure, an electric device includes a plurality of loads, an arc fault detection device to output arc signal detection information when an arc signal has been input from a wire harness connected to the plurality of loads, and a controller to detect, when the arc signal detection information has been input from the arc fault detection device, a load at which an arc fault has occurred from among the plurality of loads while performing a control operation to sequentially supply Alternating Current (AC) power to each of the plurality of loads.

The arc fault detection device may detect whether or not the arc signal has been input using an input voltage signal or current signal.

The electric device may further include an EMI filter provided between the AC power and the arc fault detection device to remove high frequency noise from the AC power and to output an AC voltage or current from which the high frequency noise has been removed.

The electric device may further include a display unit to display the load at which an arc fault has occurred from among the plurality of loads.

In accordance with another aspect of the present disclosure, an electric device system includes a plurality of electric devices, an arc fault detection device installed on a distributing board to output arc signal detection information when an arc signal has been input from a wire harness connected to the plurality of electric devices, and a control device to detect, when the arc signal detection information has been input from the arc fault detection device, an electric device at which an arc fault has occurred from among the plurality of electric devices while performing a control operation to sequentially supply Alternating Current (AC) power to each of the plurality of electric devices.

The arc fault detection device may detect whether or not the arc signal has been input using an input voltage signal or current signal.

The electric device system may further include an EMI filter provided between the AC power and the arc fault detection device to remove high frequency noise from the AC power and to output an AC voltage or current from which the high frequency noise has been removed.

The electric device system may further include a display device to display the electric device at which an arc fault has occurred from among the plurality of electric devices.

In accordance with another aspect of the present disclosure, a method to detect an arc fault in an electric device including a plurality of loads and an arc fault detection device to output arc signal detection information when an arc signal has been input from a wire harness connected to the plurality of loads includes sequentially supplying, when the arc signal detection information has been input from the arc fault detection device, Alternating Current (AC) power to each of the plurality of loads during a preset time, and detecting a load at which an arc fault has occurred from among the plurality of loads.

The method may further include supplying, when the arc signal has not been detected in any of the plurality of loads, the AC power to the plurality of loads during a specific time and determining whether or not the arc signal has been detected.

The method may further include determining, when the arc signal is not detected while the AC power is supplied to the plurality of loads, that the arc signal detection information results from an abnormal operation of the arc fault detection device and allowing the electric device to operate in a normal operation mode.

The method may further include determining, when the arc signal is detected while the AC power is supplied to the plurality of loads, whether or not the preset time during which the AC power is supplied to each of the plurality of loads is equal to or greater than a first set time, and determining, when the preset time is equal to or greater than the first set time, that the arc signal detection information results from an abnormal operation of the arc fault detection device and allowing the electric device to operate in a normal operation mode.

The method may further include determining, when the arc signal is detected while the AC power is supplied to the plurality of loads, whether or not the preset time during which the AC power is supplied to each of the plurality of loads is equal to or greater than a first set time, and increasing, when the preset time is less than the first set time, the preset time by a second set time and then again performing an arc fault detection operation for each of the plurality of loads.

The method may further include displaying the load at which an arc fault has occurred from among the plurality of loads.

In accordance with a further aspect of the present disclosure, a method to detect an arc fault in an electric device system including a plurality of electric devices and an arc fault detection device installed on a distributing board to output arc signal detection information when an arc signal has been input from a wire harness connected to the plurality of electric devices includes sequentially supplying, when the arc signal detection information has been input from the arc fault detection device, Alternating Current (AC) power to each of the plurality of electric devices during a preset time, and detecting an electric device at which an arc fault has occurred from among the plurality of electric devices.

The method may further include supplying, when the arc signal has not been detected in any of the plurality of electric devices, the AC power to the plurality of electric devices during a specific time and determining whether or not the arc signal has been detected.

The method may further include determining, when the arc signal is not detected while the AC power is supplied to the plurality of electric devices, that the arc signal detection information results from an abnormal operation of the arc fault detection device and allowing the plurality of electric devices to operate in a normal operation mode.

The method may further include determining, when the arc signal is detected while the AC power is supplied to the plurality of electric devices, whether or not the preset time during which the AC power is supplied to each of the plurality of electric devices is equal to or greater than a first set time, and determining, when the preset time is equal to or greater than the first set time, that the arc signal detection information results from an abnormal operation of the arc fault detection device and allowing the plurality of electric devices to operate in a normal operation mode.

The method may further include determining, when the arc signal is detected while the AC power is supplied to the plurality of electric devices, whether or not the preset time during which the AC power is supplied to each of the plurality of electric devices is equal to or greater than a first set time, and increasing, when the preset time is less than the first set time, the preset time by a second set time and then again performing an arc fault detection operation for each of the plurality of electric devices.

The method may further include displaying the electric device at which an arc fault has occurred from among the plurality of electric devices.

According to one aspect of the present disclosure, it may be possible to correctly detect a location (load) at which an arc fault has occurred and thus to appropriately cope with (repair) the arc fault since a procedure to determine whether or not an arc fault has occurred in a wire harness to which a load is connected while supplying power only to the load connected to the wire harness among the plurality of loads is sequentially performed for each of the plurality of loads.

According to another aspect of the present disclosure, an arc fault detection operation is repeatedly performed for each load until a time during which power is supplied to each load when an arc fault detection operation is performed for each load reaches a preset time and therefore it may be possible to increase the accuracy of detection of the occurrence of an arc fault and thus to prevent an abnormal operation in which relevant circuits are disconnected due to incorrect identification of a pseudo-arc signal as an arc signal.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a control block diagram of an electric device according to an embodiment of the present disclosure;
FIG. 2 is a control block diagram of an electric device system according to another embodiment of the present disclosure;
FIG. 3 is a flowchart illustrating a method to detect an arc fault in an electric device according to an embodiment of the present disclosure; and
FIG. 4 is a flowchart illustrating a method to detect an arc fault in an electric device system according to another embodiment of the present disclosure.

### DETAILED DESCRIPTION

Reference will now be made in detail to the embodiments of the present disclosure, examples of which are illustrated in the accompanying drawings, wherein like reference numerals refer to like elements throughout.

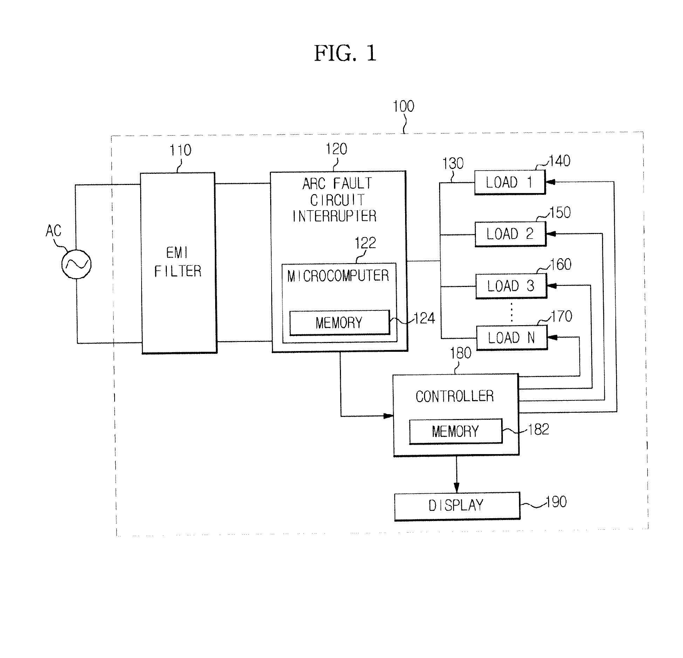

FIG. 1 is a control block diagram of an electric device according to an embodiment of the present disclosure.

As shown in FIG. 1, the electric device 100 according to the embodiment of the present disclosure includes an Electro-Magnetic Interference (EMI) filter 110, an Arc Fault Circuit Interrupter (AFCI) (or arc fault detection device) 120, a wire harness 130, a plurality of (n) loads 140 to 170, a controller 180, and a display unit 190.

The EMI filter 110 removes high frequency noise from Alternating Current (AC) power input to the EMI filter 110 and outputs an AC voltage or current from which high frequency noise has been removed.

The AFCI 120 includes a microcomputer 122 to determine whether or not an arc fault has occurred and the microcomputer 122 includes a memory 124 therein. The microcomputer 122 detects a voltage signal or a current signal input to the microcomputer 122 through the EMI filter 110 and converts the input voltage or current signal into a signal appropriate for determining whether or not an arc fault has occurred. The microcomputer 122 determines whether or not an arc fault has occurred using output level information of the converted voltage signal or current signal. Arcs occurring in residential or industrial buildings are generally classified into three types, a serial arc (contact arc), a parallel arc (line arc), and a ground arc. The memory 124 in the microcomputer 122 stores a voltage waveform and a current waveform in the case where each of the arcs has occurred. Accordingly, the microcomputer 122 may not only determine whether or not an arc fault has occurred but may also simultaneously determine the type of the arc by comparing the waveform of the input voltage signal or current signal with the stored voltage or current waveform in the case where each of the arcs has occurred. Upon determining that an arc signal has been detected, the microcomputer 122 generates and transmits arc signal detection information to the controller 180.

The wire harness 130 is a connection unit to electrically connect and separate circuits or devices. The loads 140 to 170 are connected to the AC power source AC to receive power from the AC power source AC.

The loads 140 to 170 are components that are connected to circuits or lines required for operation of the electric device 100 and that consume power. For example, when the electric device 100 is a refrigerator, the loads 140 to 170 may be a heater, an electric valve, a motor, and the like.

The controller 180 controls overall operation of the electric device 100. The controller 180 is communicably connected to the loads 140 to 170. The controller 180 transmits a control signal to each of the loads 140 to 170 to control operation of each of the loads 140 to 170.

Upon receiving arc signal detection information from the AFCI 120, the controller 180 controls power supply to each of the loads 140 to 170 so as to sequentially perform, for each of the loads 140 to 170, a process to determine whether or not an arc fault has occurred in the wire harness 130 to which the load is connected while supplying power to the load and also detects a load at which an arc fault has occurred from among the loads 140 to 170 (i.e., the location of occurrence of arc fault) using results of arc fault detection of each of the loads 140 to 170 through the AFCI 120.

The controller 180 includes the memory 182 therein. The memory 182 in the controller 180 stores a time T (hereinafter referred to as a preset time) during which power is supplied to each of the loads 140 to 170 in order to perform an arc fault detection operation for each of the loads 140 to 170, results of the arc fault detection operation of each of the loads 140 to 170 such as occurrence of an arc fault and the type of the arc fault, and the like.

The display unit 190 displays operation information of the electric device 100, arc fault occurrence information, the type of arc (such as serial arc, parallel arc, and ground arc), and the like of each of the loads 140 to 170.

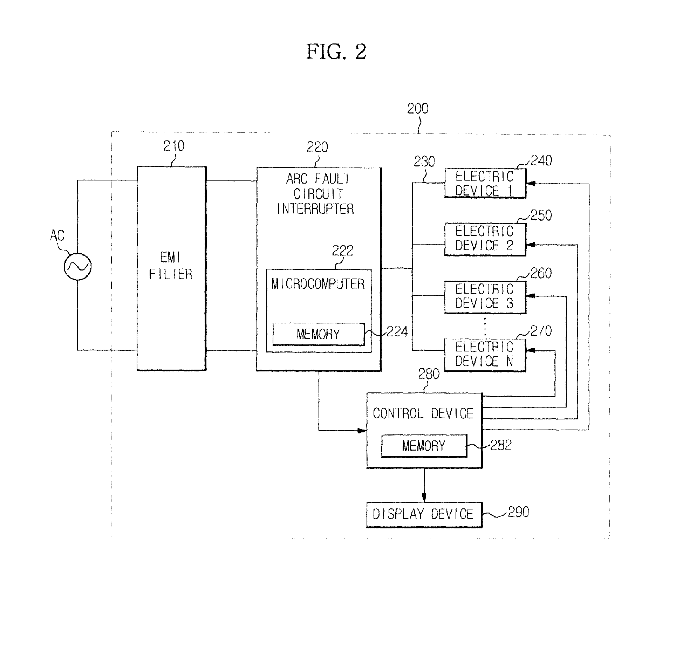

FIG. 2 is a control block diagram of an electric device system according to another embodiment of the present disclosure.

As shown in FIG. 2, the electric device system 200 according to another embodiment of the present disclosure includes an Electro-Magnetic Interference (EMI) filter 210, an AFCI 220, a wire harness 230, a plurality of (n) electric devices 240 to 270, a control device 280, and a display device 290.

While the AFCI 120 is installed in the electric device 100 and is configured so as to perform an arc fault detection operation of each of the loads 140 to 170 included in the electric device 100 in the above embodiment of FIG. 1, the AFCI 220 is installed on a distributing board and is configured so as to perform an arc fault detection operation of each of the electric devices 240 to 270 which are installed in, for example, a residence or a company in the embodiment of FIG. 2.

The EMI filter 210 removes high frequency noise from Alternating Current (AC) power input to the EMI filter 210 and outputs an AC voltage or current from which high frequency noise has been removed.

The AFCI 220 includes a microcomputer 222 to determine whether or not an arc fault has occurred and the microcomputer 222 includes a memory 224 therein. The microcomputer 222 detects a voltage signal or a current signal input to the microcomputer 222 through the EMI filter 210 and converts the input voltage or current signal into a signal appropriate for determining whether or not an arc fault has occurred. The microcomputer 222 determines whether or not an arc fault has occurred using output level information of the converted voltage signal or current signal. Arcs occurring in residential or industrial buildings are generally classified into three types, a serial arc (contact arc), a parallel arc (line arc), and a ground arc. The memory 224 in the microcomputer 222 stores a voltage waveform and a current waveform in the case where each of the arcs has occurred. Accordingly, the microcomputer 222 may not only determine whether or not an arc fault has occurred but may also simultaneously determine the type of the arc by comparing the waveform of the input voltage signal or current signal with the stored voltage or current waveform in the case where each of the arcs has occurred. Upon determining that an arc signal has been detected, the microcomputer 222 generates and transmits arc signal detection information to the control device 280.

The wire harness 230 is a connection unit to electrically connect and separate circuits or devices. The electric devices 240 to 270 are connected to the AC power source AC to receive power from the AC power source AC.

The term "electric device" refers to any device which uses electricity. For example, the plurality of electric devices 240 to 270 may be home appliances such as a refrigerator, a washing machine, and an air conditioner.

The control device 280 is communicably connected to the plurality of electric devices 240 to 270 and controls on/off of power supply to each of the electric devices 240 to 270.

Upon receiving arc signal detection information from the AFCI 220, the control device 280 controls power supply to each of the electric devices 240 to 270 so as to sequentially perform, for each of the electric devices 240 to 270, a process to determine whether or not an arc fault has occurred in the wire harness 230 to which the electric device is connected while supplying power to the electric device and also detects an electric device at which an arc fault has occurred from among the electric devices 240 to 270 (i.e., the location of occurrence of arc fault) using results of arc fault detection of each of the electric devices 240 to 270 through the AFCI 220.

The control device 280 includes the memory 282 therein. The memory 282 in the control device 280 stores a time T (hereinafter referred to as a preset time) during which power is supplied to each of the electric devices 240 to 270 in order to perform an arc fault detection operation for each of the electric devices 240 to 270, results of the arc fault detection operation of each of the electric devices 240 to 270 such as occurrence of an arc fault and the type of the arc fault, and the like.

The display device 290 displays arc fault occurrence information, the type of arc (such as serial arc, parallel arc, and ground arc), and the like of each of the electric devices 240 to 270.

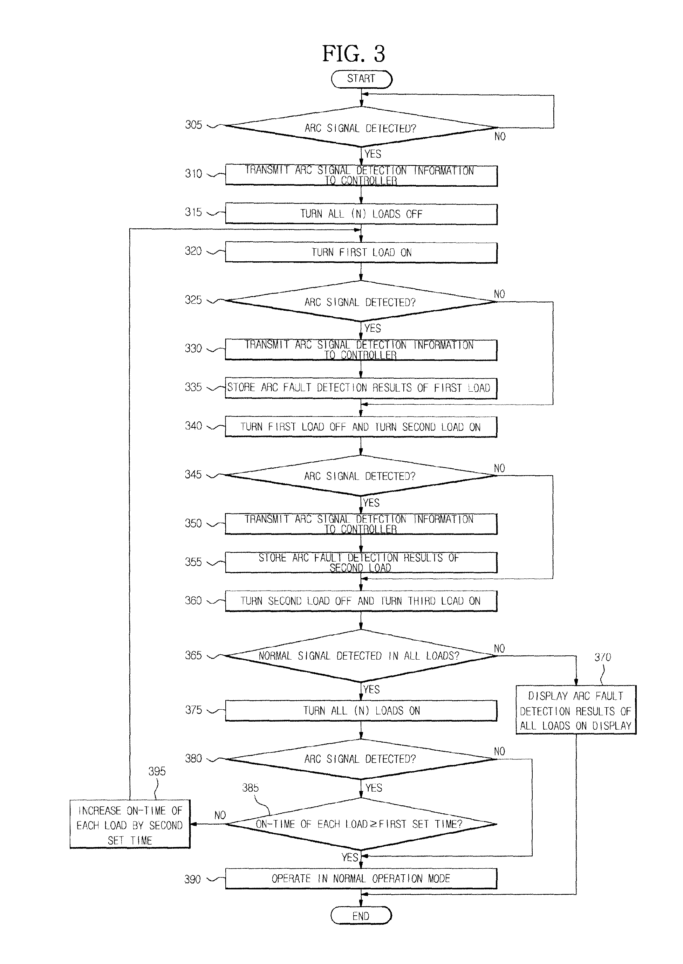

A method to detect an arc fault in an electric device according to an embodiment of the present disclosure will now be described with reference to FIG. 3.

Here, it is assumed that respective voltage waveforms and respective current waveforms in the case where a serial arc, a parallel arc, and a ground arc have occurred have been stored in the memory 124 of the microcomputer 122 of the AFCI 120 as an initial condition for explanation of operation of the embodiment of the present disclosure. It is also assumed that a time T (hereinafter referred to as a preset time) during which power is supplied to each of the electric devices 140 to 170 in order to perform an arc fault detection operation for each of the loads 140 to 170 has also been stored in the memory 124 in the controller 180 of the electric device 100.

When power of the electric device 100 is on, the AFCI 120 determines whether or not an arc signal has been detected using voltage signal or current signal information input to the AFCI 120 (305).

Upon determining that an arc signal has been detected ('YES' in operation 305), the AFCI 120 transmits arc signal detection information to the controller 180 (310).

Upon receiving the arc signal detection information from the AFCI 120, the controller 180 performs a control operation to cut off power supply to all loads 140 to 170 of the electric device 100 (315).

The controller 180 performs a control operation to supply power only to the first load (load 1) 140 during the preset time T (320).

While power is supplied only to the first load 140, the AFCI 120 determines whether or not an arc signal has been detected using voltage signal or current signal information input to the AFCI 120 (325). Here, the AFCI 120 may not only determine whether or not an arc fault has occurred but may also simultaneously determine, when an arc has occurred, the type of the arc by comparing a waveform of the input voltage signal or current signal with the voltage waveform or the current waveform in the case where each of the arcs (such as a serial arc, a parallel arc, and a ground arc) has occurred.

Upon determining that an arc signal has been detected ('YES' in operation 325), the AFCI 120 transmits arc signal detection information to the controller 180 (330). Upon receiving the arc signal detection information from the AFCI 120, the controller 180 determines that an arc fault has occurred in the wire harness 130 connected to the first load 140 and stores results of the arc fault detection operation (such as the fact that an arc fault has occurred and the type of arc) of the first load 140 in the memory 182 (335).

The controller 180 then performs a control operation to cut off power supply to the first load 140 and to supply power only to the second load (load 2) 150 during the preset time T (340).

On the other hand, upon determining that an arc signal has not been detected ('NO' in operation 325), the controller 180 proceeds to operation 340.

While power is supplied only to the second load 150, the AFCI 120 determines whether or not an arc signal has been detected using voltage signal or current signal information input to the AFCI 120 (345).

Upon determining that an arc signal has been detected ('YES' in operation 345), the AFCI 120 transmits arc signal detection information to the controller 180 (350). Upon receiving the arc signal detection information from the AFCI 120, the controller 180 determines that an arc fault has occurred in the wire harness 130 connected to the second load 150 and stores results of the arc fault detection operation (such as the fact that an arc fault has occurred and the type of arc) of the second load 150 in the memory 182 (355).

The controller 180 then performs a control operation to cut off power supply to the second load 150 and to supply power only to the third load (load 3) 160 during the preset time T (360).

On the other hand, upon determining that an arc signal has not been detected ('NO' in operation 345), the controller 180 proceeds to operation 360.

In the above manner, the controller 180 sequentially performs, for each of the plurality of loads 140 to 170, the process to determine whether or not an arc fault has occurred in the wire harness 130, to which the load is connected, while supplying power only to the load. The controller 180 turns off power supply to all loads 140 to 170 upon completion of the arc fault detection operation of all loads 140 to 170.

The controller 180 then determines whether or not a normal signal rather than an arc signal has been detected in all loads 140 to 170 (365).

Upon determining that no normal signal has been detected in all loads 140 to 170 ('NO' in operation 365), i.e., that an arc signal has been detected in one or more loads 140 to 170 during the arc fault detection operation of each of the loads 140 to 170, the controller 180 determines that the arc signal detected in operation 305 results from a normal operation of the AFCI 120. In the case where an arc signal has been detected in one or more loads 140 to 170 during the arc fault detection operation of each of the loads 140 to 170, the controller 180 displays results of the arc fault detection operation of each load (such as the fact that an arc fault has occurred and the type of arc) on the display unit 190 and enters an arc fault occurrence mode (370).

For example, if information indicating that a serial arc has been detected in the first load 140 and a parallel arc has been detected in the third load 160 is present in the memory 182 in the controller 180 after arc fault detection operations of all loads 140 to 170 are completed, the controller 180 may display arc fault detection results in the form of a message "load 1 - serial arc fault occurred and load 3 - parallel arc fault occurred" on the display unit 190.

Upon determining that a normal signal has been detected in all loads 140 to 170 ('YES' in operation 365), the controller 180 performs a control operation to supply power to all loads 140 to 170 for a specific time (375). Upon determining that a normal signal has been detected in all loads 140 to 170 although an arc fault detection operation has been performed for each of the loads 140 to 170 since it has been determined in operation 305 that an arc signal has been detected, the arc signal detected in operation 305 may not be an actual arc signal. Accordingly, the controller 180 again performs the arc fault detection operation while performing a control operation to supply power to all loads 140 to 170.

While power is supplied to all loads 140 to 170, the AFCI 120 determines whether or not an arc signal has been detected using voltage signal or current signal information input to the AFGI 120 (380).

Upon determining that no arc signal has been detected ('NO' in operation 380), the controller 180 determines that the arc signal detected in operation 305 results from an abnormal operation of the AFCI 120 since normal signals have been detected in all loads 140 to 170 and no arc signal has been detected although the arc fault detection operation has again been performed for all loads 140 to 170 and controls the electric device 100 to operate in a normal operation mode (390).

Upon determining that an arc signal has been detected ('YES' in operation 380), the controller 180 determines whether or not the time (preset time T) during which power has been supplied to each of the loads 140 to 170 for arc fault detection of each load is equal to or greater than a first set time T1 (for example, 100ms) (385).

If the time T during which power has been supplied to each of the loads 140 to 170 is equal to or greater than the first set time T1 ('YES' in operation 385), the controller 180 determines that the time T is sufficient for arc fault detection and controls the electric device 100 to operate in a normal operation mode, assuming that the arc signal detected in operation 305 results from an abnormal operation of the AFCI 120, (390).

If the time T during which power has been supplied to each of the loads 140 to 170 is less than the first set time T1 ('NO' in operation 385), the controller 180 determines that the time T is not sufficient for correct arc fault detection and increases the time T by a second set time T2 (for example, 10ms) (395) and then returns to operation 320 and performs a control operation to again carry out the arc fault detection operation for each of the loads 140 to 170.

According to this embodiment, it may be possible to correctly detect a location (load) at which an arc fault has occurred and thus to appropriately cope with (repair) the arc fault since a procedure to determine whether or not an arc fault has occurred in a wire harness 130 to which a load is connected while supplying power only to the load connected to the wire harness 130 among the plurality of loads 140 to 170 is sequentially performed for each of the plurality of loads 140 to 170. That is, information indicating a correct location (load) at which an arc fault has occurred when an electric device (product) is repaired in response to an arc fault is provided to allow repair (or replacement) of only the wire harness 130 where an arc fault has occurred, thereby facilitating repair in response to an arc fault.

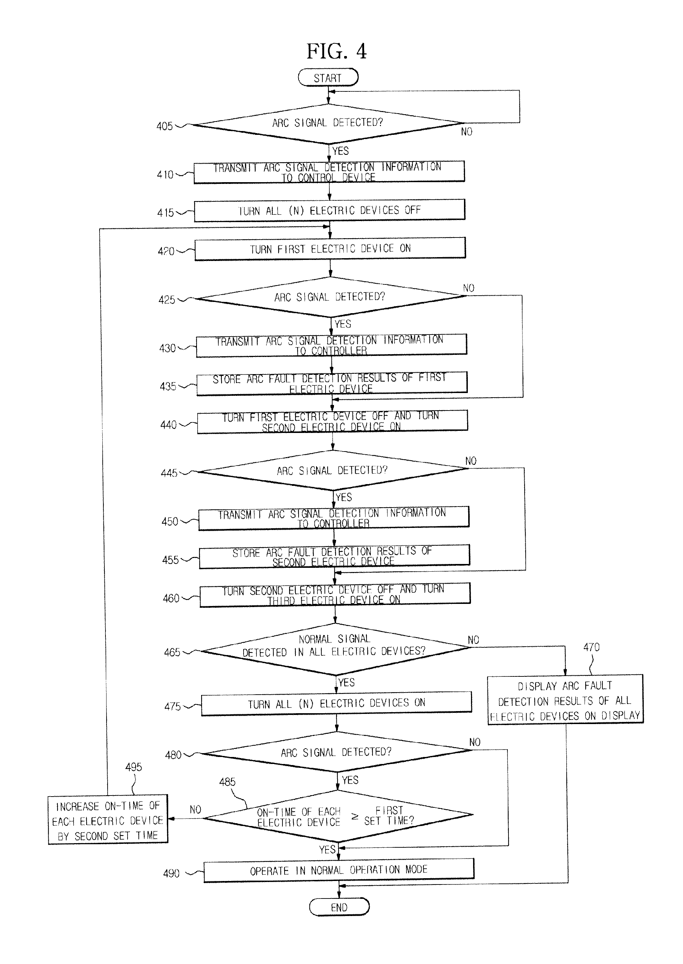

A method to detect the location of occurrence of an arc fault in an electric device system according to another embodiment of the present disclosure will now be described with reference to FIG. 4.

Here, it is assumed that respective voltage waveforms and respective current waveforms in the case where a serial arc, a parallel arc, and a ground arc have occurred have been stored in the memory 224 of the microcomputer 222 of the AFCI 220 as an initial condition for explanation of operation of the embodiment of FIG. 4. It is also assumed that a time T (hereinafter referred to as a preset time) for which power is supplied to each of the electric devices 240 to 270 in order to perform an arc fault detection operation for each of the electric devices 240 to 270 has also been stored in the memory 224 in the control device 280 of the electric device system 200. When power of one of the plurality of electric devices 240 to 270 is on, the AFCI 220 determines whether or not an arc signal has been detected using voltage signal or current signal information input to the AFCI 220 (405).

Upon determining that an arc signal has been detected ('YES' in operation 405), the AFCI 220 transmits arc signal detection information to the control device 280 (410).

Upon receiving the arc signal detection information from the AFCI 220, the control device 280 performs a control operation to cut off power supply to all electric devices 240 to 270 of the electric device system 200 (415).

The control device 280 performs a control operation to supply power only to the first electric device (electric device 1) 240 during the preset time T (420).

While power is supplied only to the first electric device 240, the AFCI 220 determines whether or not an arc signal has been detected using voltage signal or current signal information input to the AFCI 220 (425). Here, the AFCI 220 may not only determine whether or not an arc fault has occurred but may also simultaneously determine, when an arc has occurred, the type of the arc by comparing a waveform of the input voltage signal or current signal with the voltage waveform or the current waveform in the case where each of the arcs (such as a serial arc, a parallel arc, and a ground arc) has occurred.

Upon determining that an arc signal has been detected ('YES' in operation 425), the AFCI 220 transmits arc signal detection information to the control device 280 (430). Upon receiving the arc signal detection information from the AFCI 220, the control device 280 determines that an arc fault has occurred in the wire harness 230 connected to the first electric device 240 and stores results of the arc fault detection operation (such as the fact that an arc fault has occurred and the type of arc) of the first electric device 240 in the memory 282 (435).

The control device 280 then performs a control operation to cut off power supply to the first electric device 240 and to supply power only to the second electric device (electric device 2) 250 during the preset time T (440).

On the other hand, upon determining that an arc signal has not been detected ('NO' in operation 425), the control device 280 proceeds to operation 440.

While power is supplied only to the second electric device 250, the AFCI 220 determines whether or not an arc signal has been detected using voltage signal or current signal information input to the AFCI 220 (445).

Upon determining that an arc signal has been detected ('YES' in operation 445), the AFCI 220 transmits arc signal detection information to the control device 280 (450). Upon receiving the arc signal detection information from the AFCI 220, the control device 280 determines that an arc fault has occurred in the wire harness 230 connected to the second electric device 250 and stores results of the arc fault detection operation (such as the fact that an arc fault has occurred and the type of arc) of the second electric device 250 in the memory 282 (455).

The control device 280 then performs a control operation to cut off power supply to the second electric device 250 and to supply power only to the third electric device (electric device 3) 260 during the preset time T (460).

On the other hand, upon determining that an arc signal has not been detected ('NO' in operation 445), the control device 280 proceeds to operation 460.

In the above manner, the control device 280 sequentially performs, for each of the plurality of electric devices 240 to 270, the process to determine whether or not an arc fault has occurred in the wire harness 230, to which the electric device is connected, while supplying power only to the electric device. The control device 280 turns off power supply to all electric devices 240 to 270 upon completion of the arc fault detection operation of all electric devices 240 to 270.

The control device 280 then determines whether or not a normal signal rather than an arc signal has been detected in all electric devices 240 to 270 (465).

Upon determining that no normal signal has been detected in all electric devices 240 to 270 ('NO' in operation 465), i.e., that an arc signal has been detected in one or more electric devices 240 to 270 during the arc fault detection operation of each of the electric devices 240 to 270, the control device 280 determines that the arc signal detected in operation 405 results from a normal operation of the AFCI 220. In the case where an arc signal has been detected in one or more electric devices 240 to 270 during the arc fault detection operation of each of the electric devices 240 to 270, the control device 280 displays results of the arc fault detection operation of each electric device (such as the fact that an arc fault has occurred and the type of arc) on the display device 290 and enters an arc fault occurrence mode (470).

For example, if information indicating that a serial arc has been detected in the first electric device 240 and a parallel arc has been detected in the third electric device 260 is present in the memory 282 in the control device 280 after arc fault detection operations of all electric devices 240 to 270 are completed, the control device 280 may display arc fault detection results in the form of a message "electric device 1 - serial arc fault occurred and electric device 3 - parallel arc fault occurred" on the display device 290.

Upon determining that a normal signal has been detected in all electric devices 240 to 270 ('YES' in operation 465), the control device 280 performs a control operation to supply power to all electric devices 240 to 270 for a specific time (475). Upon determining that a normal signal has been detected in all electric devices 240 to 270 although an arc fault detection operation has been performed for each of the electric devices 240 to 270 since it has been determined in operation 405 that an arc signal has been detected, the arc signal detected in operation 405 may not be an actual arc signal. Accordingly, the control device 280 again performs the arc fault detection operation while performing a control operation to supply power to all electric devices 240 to 270.

While power is supplied to all electric devices 240 to 270, the AFCI 220 determines whether or not an arc signal has been detected using voltage signal or current signal information input to the AFCI 220 (480).

Upon determining that no arc signal has been detected ('NO' in operation 480), the control device 280 determines that the arc signal detected in operation 405 results from an abnormal operation of the AFCI 220 since normal signals have been detected in all electric devices 240 to 270 and no arc signal has been detected although the arc fault detection operation has again been performed for all electric devices 240 to 270 and controls each of the electric devices 240 to 270 to operate in a normal operation mode (490).

Upon determining that an arc signal has been detected ('YES' in operation 480), the control device 280 determines whether or not the time (preset time T) during which power has been supplied to each of the electric devices 240 to 270 for arc fault detection of each electric device is equal to or greater than a first set time T1 (for example, 100ms) (485).

If the time T during which power has been supplied to each of the electric devices 240 to 270 is equal to or greater than the first set time T1 ('YES' in operation 485), the control device 280 determines that the time T is sufficient for arc fault detection and controls the electric device system 200 to operate in a normal operation mode, assuming that the arc signal detected in operation 405 results from an abnormal operation of the AFCI 220, (490).

If the time T during which power has been supplied to each of the electric devices 240 to 270 is less than the first set time T1 ('NO' in operation 485), the control device 280 determines that the time T is not sufficient for correct arc fault detection and increases the time T by a second set time T2 (for example, 10ms) (495) and then returns to operation 420 and performs a control operation to again carry out the arc fault detection operation for each of the electric devices 240 to 270.

According to one embodiment of the present disclosure, it may be possible to correctly detect a location (load) at which an arc fault has occurred and thus to appropriately cope with (repair) the arc fault since a procedure to determine whether or not an arc fault has occurred in a wire harness 130 to which a load is connected while supplying power only to the load connected to the wire harness 130 among the plurality of (n) loads 140 to 170 is sequentially performed for each of the plurality of loads 140 to 170. That is, information indicating a correct location (load) at which an arc fault has occurred when an electric device (product) is repaired in response to an arc fault is provided to allow repair (or replacement) of only the wire harness 130 where an arc fault has occurred, thereby facilitating repair in response to an arc fault.

According to another embodiment of the present disclosure, it may be possible to correctly detect a location (electric device) at which an arc fault has occurred and thus to appropriately cope with (repair) the arc fault since a procedure to determine whether or not an arc fault has occurred in a wire harness 230 to which an electric device is connected while supplying power only to the electric device connected to the wire harness 230 among the plurality of (n) electric devices 240 to 270 is sequentially performed for each of the plurality of electric devices 240 to 270. That is, information indicating a correct location (electric device) at which an arc fault has occurred when an electric device (product) system is repaired in response to an arc fault is provided to allow repair (or replacement) of only the wire harness 230 where an arc fault has occurred, thereby facilitating repair in response to an arc fault.

Although a few embodiments of the present disclosure have been shown and described, it would be appreciated by those skilled in the art that changes may be made in these embodiments without departing from the principles and spirit of the invention, the scope of which is defined in the claims and their equivalents.

## Claims

1. An electric device comprising:
a plurality of loads;
an arc fault detection device to output arc signal detection information when an arc signal has been input from a wire harness connected to the plurality of loads; and
a controller to detect, when the arc signal detection information has been input from the arc fault detection device, a load at which an arc fault has occurred from among the plurality of loads while performing a control operation to sequentially supply Alternating Current (AC) power to each of the plurality of loads.

2. The electric device according to claim 1, wherein the arc fault detection device detects whether or not the arc signal has been input using an input voltage signal or current signal.

3. The electric device according to claim 1, further comprising:
an EMI filter provided between the AC power and the arc fault detection device to remove high frequency noise from the AC power and to output an AC voltage or current from which the high frequency noise has been removed.

4. The electric device according to claim 1, further comprising a display unit to display the load at which an arc fault has occurred from among the plurality of loads.

5. A method to detect an arc fault in an electric device including a plurality of loads and an arc fault detection device to output arc signal detection information when an arc signal has been input from a wire harness connected to the plurality of loads, the method comprising:
sequentially supplying, when the arc signal detection information has been input from the arc fault detection device, Alternating Current (AC) power to each of the plurality of loads during a preset time; and
detecting a load at which an arc fault has occurred from among the plurality of loads.

6. The method according to claim 5, further comprising supplying, when the arc signal has not been detected in any of the plurality of loads, the AC power to the plurality of loads during a specific time and determining whether or not the arc signal has been detected.

7. The method according to claim 6, further comprising determining, when the arc signal is not detected while the AC power is supplied to the plurality of loads, that the arc signal detection information results from an abnormal operation of the arc fault detection device and allowing the electric device to operate in a normal operation mode.

8. The method according to claim 6, further comprising determining, when the arc signal is detected while the AC power is supplied to the plurality of loads, whether or not the preset time during which the AC power is supplied to each of the plurality of loads is equal to or greater than a first set time; and
determining, when the preset time is equal to or greater than the first set time, that the arc signal detection information results from an abnormal operation of the arc fault detection device and allowing the electric device to operate in a normal operation mode.

9. The method according to claim 6, further comprising determining, when the arc signal is detected while the AC power is supplied to the plurality of loads, whether or not the preset time during which the AC power is supplied to each of the plurality of loads is equal to or greater than a first set time; and
increasing, when the preset time is less than the first set time, the preset time by a second set time and then again performing an arc fault detection operation for each of the plurality of loads.

10. The method according to claim 6, further comprising displaying the load at which an arc fault has occurred from among the plurality of loads.
